# EUROPEAN PATENT SPECIFICATION

(11) **EP 3 321 013 B1**
(45) Date of publication and mention of the grant of the patent: **29.07.2020**
(21) Application number: 17200941.7
(22) Date of filing: 09.11.2017
(51) Int. Cl.: B29C 64/268, B29C 64/153, B22F 3/105, B29C 64/20, B29C 64/124, B29C 64/165

(54) **LASER 3D PRINTER**
3D-LASERDRUCKER
IMPRIMANTE LASER 3D

(30) Priority: 09.11.2016 IT 201600113040
(43) Date of publication of application: 16.05.2018
(73) Proprietor: 3D4MEC SRL, 40037 Sasso Marconi (IT)
(72) Inventor: Corsini, Ivano, 40037 Sasso Marconi (IT); Carloni, Gabriele, 40131 Bologna (IT)
(74) Representative: Manconi, Stefano

(56) References cited:
- EP-A2- 0 856 393
- CA-A1- 2 425 468
- US-A1- 2006 108 712
- US-A1- 2015 060 422

## Description

The present invention relates to a laser 3D printer.

In particular, the present invention relates to a laser 3D printer of the type comprising: a tubular compartment, which has a substantially vertical longitudinal axis; a lifting platform slidably engaged in the tubular compartment; a feed assembly for feeding a powdered material onto the lifting platform; a laser printing head for sintering the powdered material laid on the lifting platform; and a collection chamber, which extends around at least part of the tubular compartment.

The lifting platform is progressively lowered to enable the feeding unit to feed each time a new layer of powdered material onto the lifting platform at the end of each operating cycle of the laser printing head.

At the end of processing, the lifting platform is raised up to an open top end of the tubular compartment to enable recovery of the article produced.

Since the operations described above are carried out in succession one after another, known laser 3D printers of the type described above present some drawbacks that mainly derive from the fact that their operating cycle is relatively long, and hence their throughput is relatively low.

Document EP-0856393-A2 discloses a laser 3D printer comprising two processing stations, each comprising, in turn, a tubular compartment, which has a substantially vertical longitudinal axis and is limited by a side wall that extends about the longitudinal axis, and a lifting platform, which is slidably engaged in the tubular compartment; a feed assembly for feeding a powdered material onto each lifting platform; and a laser printing head shared by the two processing stations for sintering the powdered material laid on the lifting platforms.

Document US-2015/060422-A1 discloses a laser 3D printer comprising a processing station comprising, in turn, a tubular compartment, which has a substantially vertical longitudinal axis and is limited by a side wall that extends about the longitudinal axis, and a lifting platform, which is slidably engaged in the tubular compartment; a feed assembly for feeding a powdered material onto the lifting platform; and a laser printing head for sintering the powdered material laid on the lifting platform. The laser printing head is movable on a plane parallel to the lifting platform.

The object of the present invention is to provide a laser 3D printer that will be free from the drawbacks described above and that will be simple and economically advantageous to produce.

According to the present invention a laser 3D printer is provided as specified in the annexed claims.

The present invention will now be described with reference to the annexed drawings, which illustrate a non-limiting example of embodiment thereof and in which:
Figure 1 is a schematic lateral view, with parts in cross-sectional view and parts removed for clarity purposes, of a preferred embodiment of the laser 3D printer according to the present invention;
Figures 2 and 3 are two schematic lateral views, with parts removed for clarity purposes, of a first detail of the laser 3D printer of Figure 1 illustrated in two different operative positions;
Figure 4 is a schematic perspective view of a first detail of Figures 2 and 3;
Figure 5 is a schematic plan view, with parts removed for clarity purposes, of a second detail of Figures 2 and 3;
Figure 6 is a schematic lateral view, with parts removed for clarity purposes, of a second detail of the laser 3D printer of Figure 1 illustrated in two different operative positions;
Figure 7 is a schematic lateral view, with parts in cross section and parts removed for clarity purposes, of a detail of Figure 6;
Figure 8 is a schematic perspective view of a third detail of Figures 2 and 3;
Figure 9 is a schematic perspective view of a fourth detail of Figures 2 and 3; and
Figures 10 to 15 illustrate schematically in top plan view, with parts removed for clarity purposes, six variants of the laser 3D printer of Figure 1.

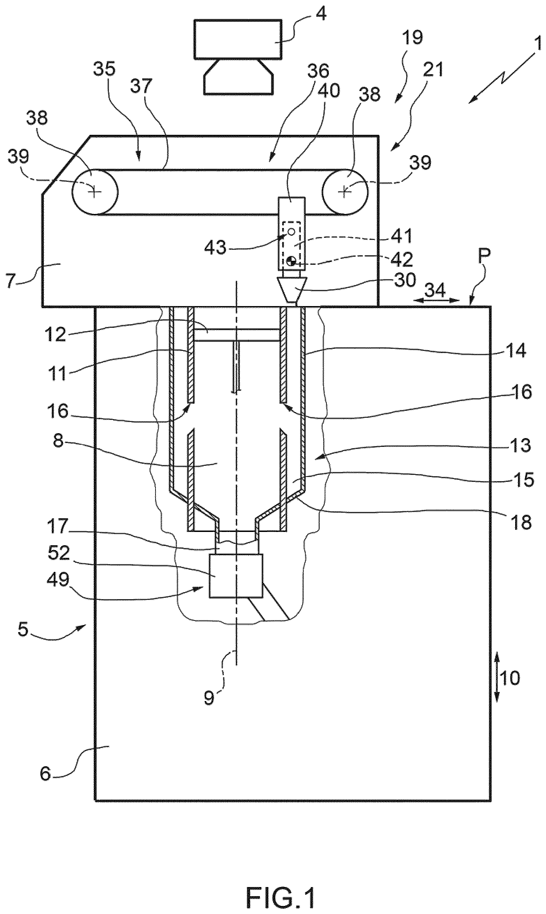

With reference to Figures 1, 2, and 3, designated as a whole by 1 is a laser 3D printer for producing three-dimensional objects 2 by sintering of a powdered material 3 using a laser head 4.

The printer 1 comprises a supporting frame 5, which in turn comprises a bottom box-shaped body 6 and a top box-shaped body 7 connected together along a substantially horizontal plane P of separation.

The body 6 houses within it a tubular compartment 8, which has a longitudinal axis 9 parallel to a substantially vertical direction 10 perpendicular to the plane P, extends downwards starting from the plane P, and has a cross section having a substantially square shape.

The compartment 8 is limited by a side wall 11 slidably engaged by a lifting platform 12, which extends perpendicular to the direction 10 and is mobile along the compartment 8 in the direction 10 itself under the thrust of a driving device (known and not illustrated).

The platform 12 is connected to a known vibrating device (not illustrated) designed to impart on the platform 12 itself vibrations according to a given law.

The compartment 8 is inserted within a collection chamber 13, which extends downwards from the plane P, moreover extends around the wall 11, and is limited by a side wall 14.

The walls 11, 14 define between them an annular channel 15, which communicates with the compartment 8 via a plurality of openings 16, which are made in an intermediate point of the wall 11 and are distributed about the axis 9.

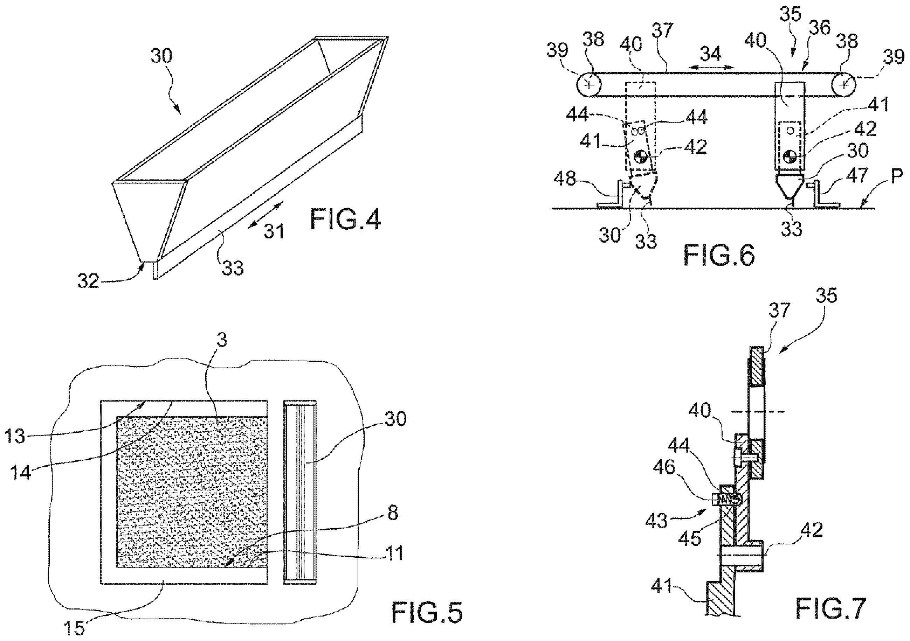

According to what is illustrated in Figure 5, the channel 15 has a substantially U-shaped inlet section, and is closed by the plane P on a fourth side thereof.

The chamber 13 has an outlet 17 for the material 3 from the channel 15 and is limited by a bottom wall 18, which is configured for feeding the material 3 towards the outlet 17 and in particular is inclined downwards.

The printer 1 further comprises a feeding assembly 19 for feeding the material 3 onto the platform 12.

The assembly 19 comprises a top tank 20 mounted above the body 7, and a dispensing and distribution unit 21 mounted above the plane P and connected to the tank 20 via a vibrating feed duct 22.

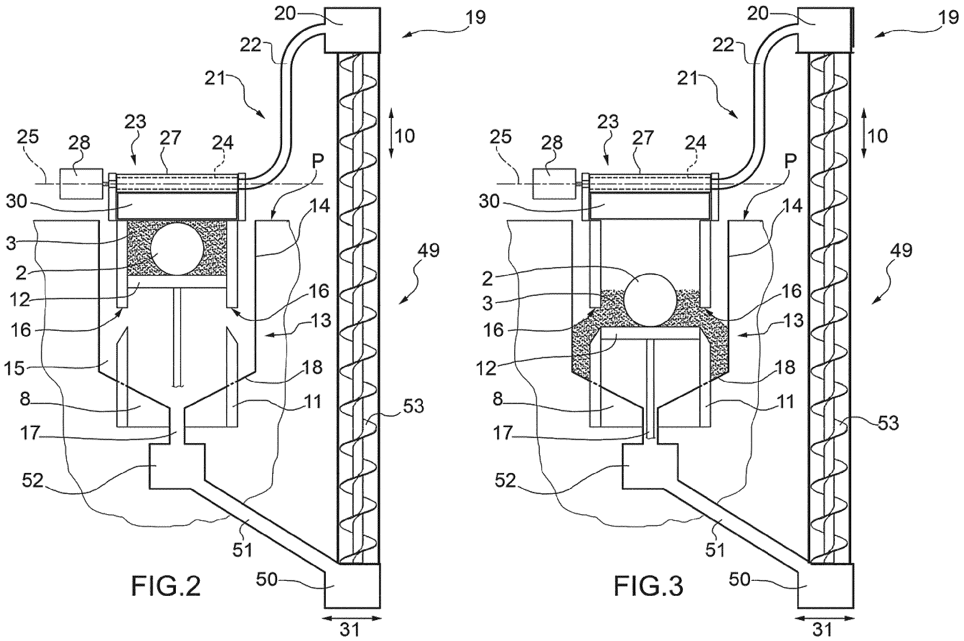

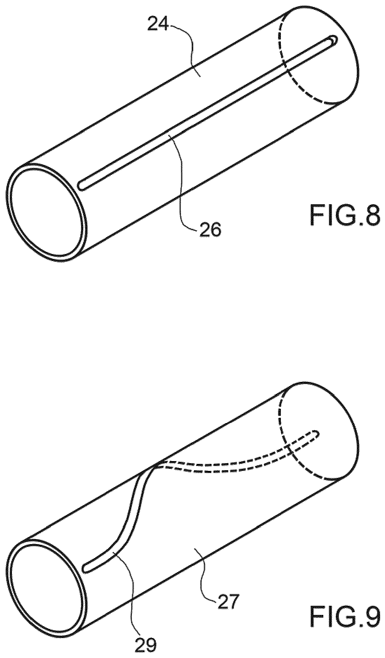

With reference to Figures 2, 3, 8, and 9, the unit 21 comprises a dispensing device 23, in turn comprising a fixed inner pipe 24, which has a longitudinal axis 25 parallel to the plane P and transverse to the direction 10, is coupled in an angularly fixed way to the frame 5, and communicates with the duct 22.

The pipe 24 has a slit 26, which is made through the pipe 24 parallel to the axis 25, and faces the plane P.

The device 23 further comprises a rotating outer pipe 27, which extends around the pipe 24 coaxially thereto about the axis 25 and is rotatably coupled to the pipe 24 for rotating, with respect to the pipe 24 and under the thrust of a driving device 28, about the axis 25 itself.

The pipe 27 has a slit 29, which is made through the pipe 27 and is wound in a helix about the axis 25 through an angle of substantially 180°.

According to what is illustrated in Figures 2, 3, and 4, the unit 21 further comprises a distributor 30, which has the shape of a hopper converging towards the plane P, extends in a direction 31 parallel to the axis 25, and is mounted between the plane P and the dispensing device 23.

The distributor 30 is limited underneath by a plane face 32, and is provided with a spatula 33, which extends in the direction 31 and projects downwards from the face 32 itself.

The distributor 30 is mobile, with respect to the dispensing device 23 and above the compartment 8, in a feed direction 34 parallel to the plane P and orthogonal to the directions 10 and 31 with a reciprocating rectilinear motion comprising a forward stroke and a return stroke.

In this connection, it should be pointed out that, at the end of the return stroke, the distributor 30 sets itself underneath the dispensing device 23.

The distributor 30 is displaced in the direction 34 by a driving device 35 comprising a belt conveyor 36, in turn comprising a belt 37 wound in a loop about a pair of pulleys 38, one of which is motor-driven in an intermittent way, and which are mounted so as to turn about respective axes 39 of rotation parallel to one another and to the direction 31.

The device 35 further comprises an engagement plate 40, which is fixed to the belt 37, and carries connected thereto a rocker 41 projecting upwards from the distributor 30.

The rocker 41 is hinged to the plate 40 so as to turn, with respect to the plate 40, about a pivot axis 42 parallel to the direction 31 between a lowered, operating, position (represented with a solid line in Figure 6), in which the plane of vertical symmetry of the distributor 30 is perpendicular to the plane P, and a raised, resting, position (represented with a dashed line in Figure 6), in which the plane of vertical symmetry of the distributor 30 is inclined with respect to the plane P and the spatula 33 is raised with respect to the plane P itself.

With reference to Figures 6 and 7, the distributor 30 is locked in its operating position and in its resting position by a locking device 43 comprising a pair of slots 44, which are provided in the plate 40 and are circumferentially aligned with respect to one another about the axis 42.

The device 43 further comprises an engagement ball 45, which is mounted in a top arm of the rocker 41 and is displaced into a locking position in which the ball 45 engages one of the slots 44, and is normally kept in said position, by a spring 46 set between the rocker 41 and the ball 45 itself.

At the end of the return stroke, the distributor 30 is displaced into its operating position by a first end-of-travel element 47 designed to come into contact with a bottom arm of the rocker 41.

At the end of the forward stroke, the distributor is displaced into its resting position by a second end-of-travel element 48 designed to come into contact with the bottom arm of the rocker 41.

Finally, the printer 1 comprises a device 49 for recycling the material 3 collected in the chamber 13 and fed to the outlet 17.

The device 49 comprises: a bottom tank 50 set underneath the outlet 17; a chute 51, which extends between the outlet 17 and the tank 50; a filter 52 mounted at the inlet of the chute 51; and an auger 53 designed to transfer the material 3 from the tank 50 to the tank 20.

Operation of the printer 1 will now be described starting from an instant at which:
the platform 12 is set at a distance from the plane P that is approximately equal to the thickness of a layer of material 3; and
the distributor 30 is set in its operating position underneath the dispensing device 23.

The rotating outer pipe 27 is set in rotation about the axis 25 by the driving device 28 so as to enable the slit 29 to align radially with the slit 26 and define an outlet opening (not illustrated) for the material 3 from the dispensing device 23.

Since the slit 29 is wound in a helix about the axis 25 through an angle of substantially 180°, the aforesaid outlet opening (not illustrated) for exit of the material 3 from the device 23 progressively advances along the axis 25 so as to deposit a homogeneous layer of material 3 within the distributor 30.

At the end of a rotation through 180° of the pipe 27 about the axis 25, the slit 29 disengages the slit 26, and the outlet opening (not illustrated) is closed during the next rotation through 180° of the pipe 27 itself.

Once the material 3 has been fed into the distributor 30, the distributor 30 is displaced above the compartment 8 with its forward stroke in the direction 34 so as to distribute the material 3 over the platform 12.

At the end of its forward stroke, the distributor 30 is first displaced into its resting position by the element 48, and is then displaced above the compartment 8 in its return stroke, without interfering with the material 3.

At the end of the return stroke, the distributor 30 is again displaced into its operating position by the element 47.

The above operating cycle of the dispensing and distribution unit 21 is repeated and combined with lowering of the platform 12 so as to create an object 2.

During production of the object 2, the platform 12 is always set above the openings 16.

Once the object 2 is obtained, the platform 12 is lowered below the openings 16 and set in vibration so as to enable the material 3 to exit from the compartment 8, enter the chamber 13, and proceed towards the outlet 17.

The material 3 is fed from the outlet 17 through the filter 52, along the chute 51, and into the tank 50, and is finally again fed into the tank 20 by the auger 53.

The printer 1 consequently presents the advantage that the powdered material 3 is in part used to obtain the object 2 and in part recirculated into the tank 20 without being dispersed in the environment surrounding the compartment 8 and without requiring operations of recovery of the residual material 3 by the operating staff.

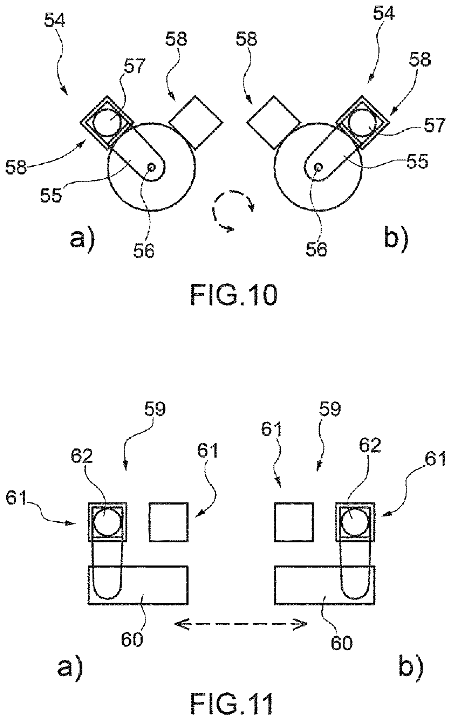

The variant illustrated in Figure 10 regards a printer 54 comprising a rotating arm 55, which is mounted so as to turn about an axis 56 of rotation parallel to the direction 10 and supports a laser head 57 altogether similar to the laser head 4.

The laser head 57 is displaced by the arm 55 through a plurality of processing stations 58 (in the case in point, two stations 58), which are distributed about the axis 56, and each comprise a respective compartment 8, a respective collection chamber 13, and a respective platform 12.

In use, the laser head 57 is displaced alternatively onto one of the stations 58 so as to enable loading, unloading, and tooling of the other station 58.

The variant illustrated in Figure 11 regards a printer 59 comprising: a rectilinear guide 60; a plurality of processing stations 61 (in the case in point, two stations 61), which are distributed along the guide 60 and are altogether similar to the stations 58; and a laser head 62, which is altogether similar to the laser head 57, and is mobile, in use, along the guide 60 between the stations 61 themselves.

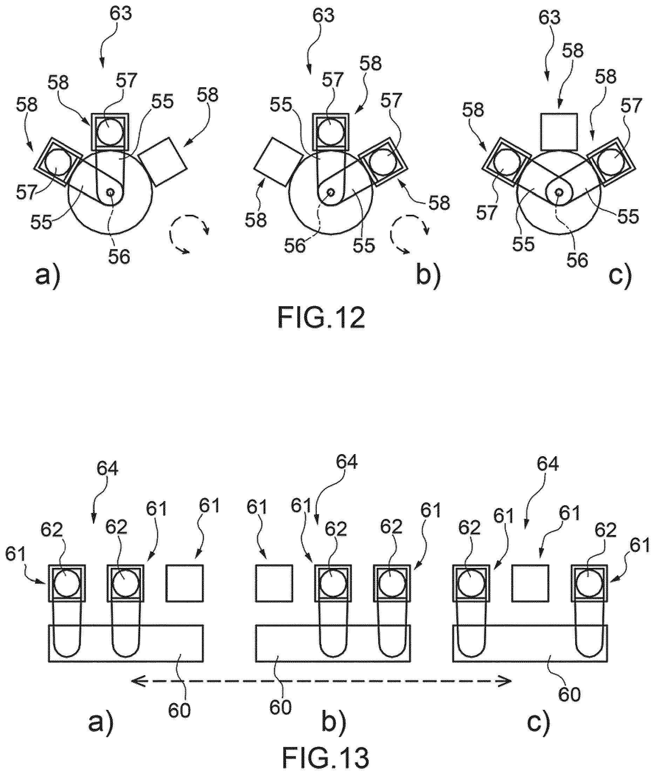

The variant illustrated in Figure 12 regards a printer 63, which differs from the printer 54 merely in that it comprises at least three stations 58 distributed about the axis 56 and at least two heads 57 set on respective arms 55 mounted so as to rotate independently of one another about the axis 56. In use, each laser head 57 is displaced about the axis 56 through at least two stations 58.

The variant illustrated in Figure 13 regards a printer 64, which differs from the printer 59 merely in that it comprises at least three stations 61 distributed along the guide 60 and at least two heads 62 mobile along the guide 60 itself independently of one another. In use, each head 62 is displaced along the guide 60 through at least two stations 61.

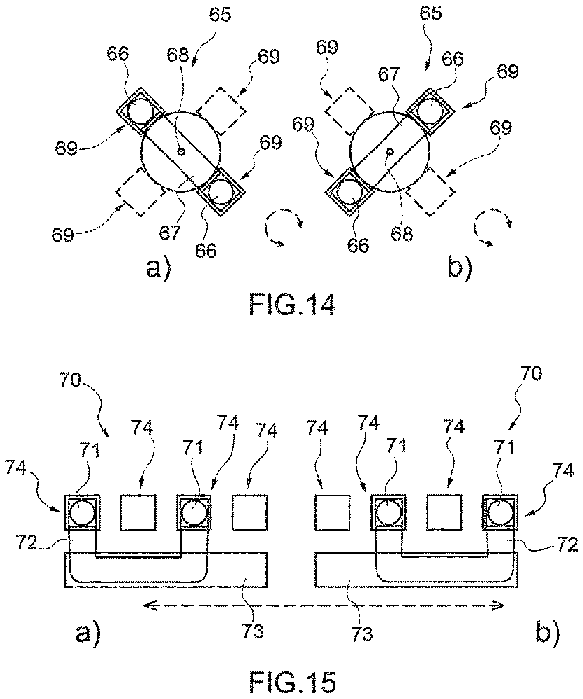

The variant illustrated in Figure 14 regards a printer 65 comprising: a plurality of laser heads 66 (in the case in point, two heads 66) set on a rotary platform 67 mounted so as to turn about an axis 68 of rotation parallel to the direction 10; and a plurality of processing stations 69 (in the case in point, four stations 69), which are equal in number to an integer multiple of the number of the heads 66 and are distributed about the axis 68 itself. In use, the heads 66 are displaced in unison by the platform 67 about the axis 68 and between the stations 69.

The variant illustrated in Figure 15 regards a printer 70 comprising: a plurality of laser heads 71 (in the case in point, two heads 71) fixed to a supporting fork 72 mounted so as to displace along a rectilinear guide 73; and a plurality of processing stations 74 (in the case in point, four stations 74), which are equal in number to an integer multiple of the number of heads 71 and are distributed along the guide 73 itself. In use, the heads 71 are displaced in unison by the fork 72 along the guide 73 and between the stations 74.

The printers 54, 59, 63, 64, 65, and 70 present some advantages mainly deriving from the fact that the number of processing stations 58, 61, 69, and 74 is always greater than the number of heads 57, 62, 66, and 71 so as to enable loading, unloading, and tooling of some of the stations 58, 61, 69, and 74, while the heads 57, 62, 66, and 71 are carrying out processing on at least part of the other stations 58, 61, 69, and 74. Consequently, the printers 54, 59, 63, 64, 65, and 70 present a relatively high throughput.

## Claims

1. A laser 3D printer comprising: a processing station (58, 61, 69, 74), comprising, in turn, a tubular compartment (8), which has a substantially vertical longitudinal axis (9) and is limited by a side wall (14) that extends about the longitudinal axis (9), and a lifting platform (12), which is slidably engaged in the tubular compartment (8); a feed assembly (19) for feeding a powdered material (3) onto the lifting platform (12); and a laser printing head (57, 62, 66, 71) for sintering the powdered material (3) laid on the lifting platform (12); said laser 3D printer being **characterized in that** it comprises at least two laser printing heads (66, 71) and a plurality of processing stations (69, 74) equal in number to an integer multiple of the number of laser printing heads (66, 71); the laser printing heads (66, 71) being fixed with respect to one another so as to displace in unison between said processing stations (69, 74).

2. The laser 3D printer according to Claim 1, wherein the laser printing heads (71) are slidably coupled to a rectilinear guide (73) for displacing between the processing stations (74) with a rectilinear motion.

3. The laser 3D printer according to Claim 1 and further comprising a rotary supporting device (67) mounted so as to rotate about an axis of rotation (56, 68) and displace the laser printing heads (66) between the processing stations (69).

4. The laser 3D printer according to any one of the preceding claims and comprising a rotary supporting device (67) mounted so as to rotate about an axis of rotation (68) and displace the laser printing heads (66) in unison between said processing stations (69).

## Patentansprüche

1. 3D-Laserdrucker, umfassend: eine Verarbeitungsstation (58, 61, 69, 74), die wiederum ein rohrförmiges Fach (8), das eine im Wesentlichen vertikale Längsachse (9) aufweist und durch eine Seitenwand (14) begrenzt ist, die sich um die Längsachse (9) erstreckt, und eine Hebeplattform (12) umfasst, die verschiebbar in dem rohrförmigen Fach (8) in Eingriff ist; eine Zuführanordnung (19) zum Zuführen eines pulverförmigen Materials (3) auf die Hebeplattform (12); und einen Laserdruckkopf (57, 62, 66, 71) zum Sintern des auf die Hebeplattform (12) gelegten pulverförmigen Materials (3); wobei der 3D-Laserdrucker **dadurch gekennzeichnet ist, dass** er zumindest zwei Laserdruckköpfe (66, 71) und eine Mehrzahl von Verarbeitungsstationen (69, 74) umfasst, deren Anzahl gleich einem ganzzahligen Vielfachen der Anzahl von Laserdruckköpfen (66, 71) ist; wobei die Laserdruckköpfe (66, 71) in Bezug aufeinander fixiert sind, um sich gemeinsam zwischen den Verarbeitungsstationen (69, 74) zu verlagern.

2. 3D-Laserdrucker nach Anspruch 1, wobei die Laserdruckköpfe (71) verschiebbar mit einer geradlinigen Führung (73) zum Verlagern zwischen den Verarbeitungsstationen (74) mit einer geradlinigen Bewegung gekoppelt sind.

3. 3D-Laserdrucker nach Anspruch 1 und ferner umfassend eine Drehstütz- bzw. -trägervorrichtung (67), die so montiert ist, dass sie sich um eine Drehachse (56, 68) dreht und die Laserdruckköpfe (66) zwischen den Verarbeitungsstationen (69) verlagert.

4. 3D-Laserdrucker nach einem der vorhergehenden Ansprüche und umfassend eine Drehstütz- bzw. -trägervorrichtung (67), die so montiert ist, dass sie sich um eine Drehachse (68) dreht und die Laserdruckköpfe (66) gemeinsam zwischen den Verarbeitungsstationen (69) verlagert.

## Revendications

1. Imprimante laser 3D comprenant : une station de traitement (58, 61, 69, 74) qui comprend, en succession, un compartiment tubulaire (8) qui présente un axe longitudinal sensiblement vertical (9) et qui est limité par une paroi latérale (14) qui s'étend autour de l'axe longitudinal (9), et une plate-forme de soulèvement (12) qui est engagée de façon coulissante à l'intérieur du compartiment tubulaire (8) ; un assemblage d'alimentation (19) pour alimenter un matériau pulvérulent (3) sur la plate-forme de soulèvement (12) ; et une tête d'impression laser (57, 62, 66, 71) pour fritter le matériau pulvérulent (3) qui est déposé sur la plate-forme de soulèvement (12) ; ladite imprimante laser 3D étant **caractérisée en ce qu'**elle comprend au moins deux têtes d'impression laser (66, 71) et une pluralité de stations de traitement (69, 74) dont le nombre est égal à un multiple entier du nombre de têtes d'impression laser (66, 71) ; les têtes d'impression laser (66, 71) étant fixées les unes par rapport aux autres de manière à ce qu'elles soient déplacées à l'unisson entre lesdites stations de traitement (69, 74).

2. Imprimante laser 3D selon la revendication 1, dans laquelle les têtes d'impression laser (71) sont couplées de façon coulissante à un guide rectiligne (73) de manière à ce qu'elles soient déplacées entre les stations de traitement (74) selon un mouvement rectiligne.

3. Imprimante laser 3D selon la revendication 1 et comprenant en outre un dispositif de support pouvant être entraîné en rotation (67) qui est monté de manière à ce qu'il soit entraîné en rotation autour d'un axe de rotation (56, 68) et de manière à ce qu'il déplace les têtes d'impression laser (66) entre les stations de traitement (69).

4. Imprimante laser 3D selon l'une quelconque des revendications précédentes et comprenant un dispositif de support pouvant être entraîné en rotation (67) qui est monté de manière à ce qu'il soit entraîné en rotation autour d'un axe de rotation (68) et de manière à ce qu'il déplace les têtes d'impression laser (66) à l'unisson entre lesdites stations de traitement (69).
